(19) Europäisches Patentamt

European Patent Office

Office européen des brevets

(11)  EP 2 009 725 B1

(12)  **EUROPEAN PATENT SPECIFICATION**

(45) Date of publication and mention
of the grant of the patent:
**01.09.2010  Bulletin 2010/35**

(51) Int Cl.:
*H01M 8/02* (2006.01)    *H01M 8/24* (2006.01)

(21) Application number: **08157880.9**

(22) Date of filing: **09.06.2008**

(54) **Fuel cell stack having multiple parallel fuel cells**

Brennstoffzellenstapel mit mehreren parallelen Brennstoffzellen

Empilement de piles à combustible ayant plusieurs piles à combustible parallèles

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **28.06.2007  US 823548**

(43) Date of publication of application:
**31.12.2008  Bulletin 2009/01**

(73) Proprietor: **Delphi Technologies, Inc.
Troy, Michigan 48007 (US)**

(72) Inventors:
• **Haltiner JR., Karl Jacob
Fairport, NY 14450 (US)**

• **Mukerjee, Subhasish
Pittsford, NY 14534 (US)**

(74) Representative: **Denton, Michael John et al
Delphi France SAS
64 Avenue de la Plaine de France
ZAC Paris Nord II
B.P. 65059, Tremblay en France
95972 Roissy Charles de Gaulle Cedex (FR)**

(56) References cited:
**EP-A- 0 585 049      EP-A- 1 505 674
DE-A1-102006 002 014   GB-A- 2 404 491
US-A1- 2004 018 415**

**Description**

TECHNICAL FIELD

The present invention relates to fuel cell stacks; more particularly, to a fuel cell stack having multiple parallel fuel cells; and most particularly to a solid oxide fuel cell stack comprising a plurality of fuel cell cassettes arranged in series electric flow wherein each cassette includes at least two fuel cells arranged in parallel electric flow.

BACKGROUND OF THE INVENTION

In practical fuel cell systems, the output of a single fuel cell is typically less than one volt, so connecting multiple cells in series is required to achieve useful operating voltages. Typically, a plurality of fuel cell stages, each stage comprising a single fuel cell unit, are mechanically stacked up in a "stack" and are electrically connected in series electric flow from the anode of one cell to the cathode of an adjacent cell via intermediate stack elements known in the art as interconnects and separator plates.

A solid oxide fuel cell (SOFC) comprises a cathode layer, an electrolyte layer formed of a solid oxide bonded to the cathode layer, and an anode layer bonded to the electrolyte layer on a side opposite from the cathode layer. In use of the cell, air is passed over the surface of the cathode layer, and oxygen from the air migrates through the electrolyte layer and reacts in the anode with hydrogen being passed over the anode surface, forming water and thereby creating an electrical potential between the anode and the cathode of about 1 volt. Typically, each individual fuel cell is mounted, for handling, protection, and assembly into a stack, within a metal frame referred to in the art as a "picture frame", to form a "cell-picture frame assembly".

To facilitate formation of a prior art stack of fuel stages wherein the voltage formed is a function of the number of fuel cells in the stack, connected in series, a known intermediate process for forming an individual fuel cell stage joins together a cell-picture frame assembly with an anode interconnect and a metal separator plate to form an intermediate structure known in the art as a fuel cell cassette ("cassette"). The thin sheet metal separator plate is stamped and formed to provide, when joined to the mating cell frame and anode spacers, a flow space for the anode gas. Typically, the separator plate is formed of ferritic stainless steel for low cost.

In forming the stack, the cell-picture frame assembly of each cassette is sealed to the perimeter of the metal separator plate of the adjacent cassette to form a cathode air flow space and to seal the feed and exhaust passages for air and hydrogen against cross-leaking or leaking to the outside of the stack.

The power output **P** of a fuel cell stack is the product of the voltage **V** and current **I,**

$$P = IV \qquad \text{(Eq. 1)}$$

The voltage is a function of the number of fuel cells connected in series in the stack, while the current is a function of the active area of the individual fuel cells. Thus, in designing a fuel cell system, to increase the power output requires an increase in either the number of fuel cells, or the individual fuel cell area, or both.

There are tradeoffs in the number of cells and the surface area of the cells to achieve a desired power level.

Adding more cells in series to increase stack voltage is relatively straightforward, but the reliability of each cell-to-cell connection becomes more critical since the overall reliability of a stack of N cells is a function of the reliability of each connection raised to the Nth power. Also, the resistive losses at the cell-to-cell junctures increase with each connection, and the proportion of system volume required for manifolding of the inlet and return gases increases.

On the other hand, increasing the cell active area to increase the stack amperage by increasing the areal extent of each cell presents many challenges. The cell is a planar ceramic structure, so as the size increases the thickness must also increase to preserve the same level of mechanical strength (that is, resistance to breakage) which significantly increases the cost and size (volume) of the cell per unit area of electric generating capacity. In addition, the manufacturing defect rate is determined by the number of defects per cell, not per unit area, so as the area of a cell increases the number of defects per cell will increase, which adversely affects the overall manufacturing rejection rate in both cell manufacturing and stack manufacturing. Also, as the surface area increases at a constant length-to-width ratio (currently preferred aspect ratio of a prior art fuel cell is about 3:2), the thermal differences across the cell will increase, or the pressure drop will increase, or the gas channel height (and thus overall stack height) will increase, or some intermediate combination of all of these effects must occur. Alternatively, the width or length may be increased while maintaining the same length or width, but this departure from a prior art near-square cell shape makes firing of the ceramic cell very difficult while maintaining acceptable flatness and uniform shrinkage.

What is needed in the art is a means to increase the power output of a fuel cell stack without increasing either the number of cell-to-cell connections or the size of individual fuel cells.

It is a principal object of the present invention to increase the power output of a fuel cell stack.

SUMMARY OF THE INVENTION

Briefly described, a fuel cell stack in accordance with the invention comprises a plurality of serially-assembled fuel cell stages preferably formed as individual cassette units. Each stage comprises a plurality of fuel cell units arranged electrically in parallel, such that each stage has the voltage drop of a single fuel cell unit. The assembled stack thus comprises a plurality of internal fuel cell stacks arranged in parallel. The voltage of the plurality of internal stacks is the same as for a prior art single-cell stack of the same number of stages, but the current and hence the power output is multiplied over that of a single-cell stack by the number of internal fuel cell stacks.

Preferably, each cassette includes a plurality of windows for receiving a plurality of individual fuel cell units; a plurality of anode and cathode interconnects; and a single separator plate.

BRIEF DESCRIPTION OF THE DRAWINGS

The present invention will now be described, by way of example, with reference to the accompanying drawings, in which:

FIG. 1 is a schematic drawing of a prior art SOFC mounted in a frame;

FIG. 2 is an exploded isometric drawing of a prior art fuel cell stack employing a plurality of single-cell cassettes;

FIG. 3 is a plan view of a first embodiment of a multiple-cell fuel cell cassette for use in a stack of multiple-cell cassettes, showing two cells in a single cassette;

FIG. 4 is a plan view of an assembly stage of the two-cell cassette shown in FIG. 3, showing the placement of the anode interconnects;

FIG. 5 is a plan view of the side of the cassette shown in FIG. 3, showing a single separator plate;

FIG. 6 is a plan view of a second embodiment of a multiple-cell fuel cell cassette for use in a stack of multiple-cell cassettes, showing an alternative arrangement of two cells in a single cassette; and

FIG. 7 is a plan view of a third embodiment of a multiple-cell fuel cell cassette for use in a stack of multiple-cell cassettes, showing four cells in a single cassette.

Corresponding reference characters indicate corresponding parts throughout the several views. The exemplifications set out herein illustrate currently preferred embodiments of the invention, and such exemplifications are not to be construed as limiting the scope of the invention in any manner.

DESCRIPTION OF THE PREFERRED EMBODIMENTS

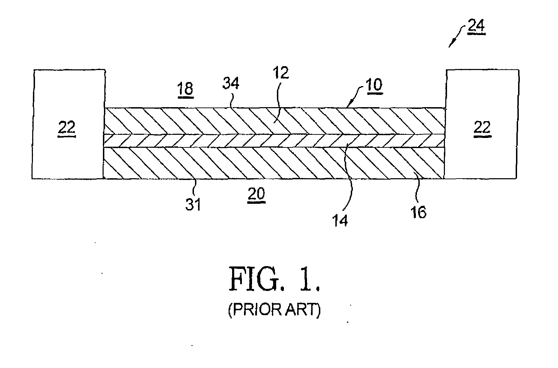

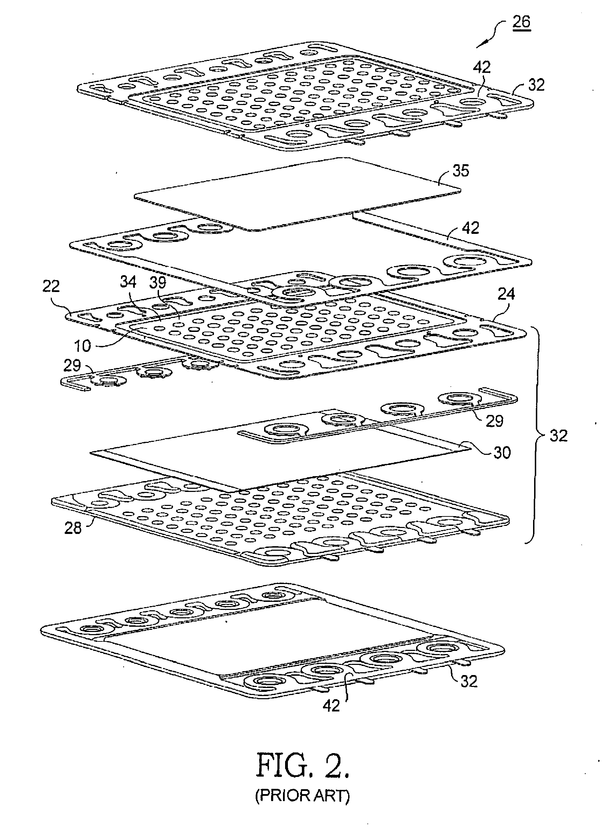

Referring to FIGS. 1 and 2, an exemplary prior art SOFC fuel cell module 10 comprises a cathode layer 12, an electrolyte layer 14 formed of a solid oxide and bonded to the cathode layer 12, and an anode layer 16 bonded to the electrolyte layer 14 on a side opposite from the cathode layer. Air 18 is passed over the surface 34 of the cathode layer 12, and oxygen from the air migrates through the electrolyte layer 14 and reacts in the anode layer 16 with hydrogen anode gas 20 being passed over the anode surface 31 to form water, thereby creating an electrical potential between the anode and the cathode of about 1 volt. Each individual fuel cell module 10 is mounted, for handling, protection, and assembly into a stack, within a metal frame 22 referred to in the art as a "picture frame", to form a "cell-picture frame assembly" 24.

To facilitate formation of a prior art stack 26 of individual fuel cells connected in series wherein the voltage formed is a function of the number of individual fuel cell modules in the stack, an intermediate process joins together each cell-picture frame assembly 24 with a separator plate 28 and a first solid (anode) interconnect 30 to form an intermediate structure known as a fuel cell cassette 32. The thin sheet metal separator plate 28 is stamped and formed to provide, when joined to the mating cell frame 22 and anode spacers 29, a flow space for the anode gas 20. Preferably, the separator plate 28 is formed of ferritic stainless steel for low cost. Anode interconnect 30 is placed between the separator plate 28 and the anode surface 31 of the cell within the cassette 32. The solid anode interconnect 30 is typically a woven wire mesh of uniform thickness and is solid in the direction perpendicular to the cell surface in a multitude of points.

A second solid (cathode) interconnect 35, installed during final assembly against cathode surface 34, provides a cathode air flow space. Interconnect 35 also is typically a woven wire mesh of uniform thickness and solid in the direction perpendicular to the cell surface in a multitude of points.

During the final prior art stack assembly process, a glass perimeter seal 42 is disposed between adjacent of the cassettes 32, and the stack under pressure is brought to operating temperature and allowed to settle to its final form.

The separator plate and cell frame may deform slightly, providing a compliant assembly, until the cells and interconnects are resting on one another, under load, which prevents further motion.

The present invention provides the capability to increase the active fuel cell area in a cassette without increasing the size of an individual fuel cell element. Alternatively, each fuel cell element can be sized for an optimum combination of cost, manufacturability, and mechanical robustness, largely independent of the cassette active area requirement. Multiple cells are then arranged into a single cassette to achieve the desired active area per cassette.

The cell picture frame has a plurality of openings, also referred to herein as "windows", to accept a plurality of fuel cells in a single frame which is then assembled to a single separator plate, with interconnects and anode spacers, to form a multiple-cell cassette having the desired active area per cassette. The invention thus provides an optimum combination of cost per unit power, volume per unit power, manufacturability, and mechanical robustness.

Cell cost is driven largely by surface area and thickness: for a given thickness and manufacturing discard rate, two cells would cost approximately the same as one cell of the same area. However, an increase in active area requires the thickness of a single cell to be increased for the required mechanical strength, and there would be a higher discard rate as well. Multiple cells in a single frame have slightly less active area than comparable single cells, due to the need for divider bars (in effect, window "mullions"), and more components to assemble than stacks having large single cells, but the additional cost is more than offset by savings in thickness and discard rate.

On the other hand, cassette and stack cost are driven largely by the number of components. The cost of stamping one larger cassette is only slightly more than the cost of stamping one smaller cassette and is much less than the cost of stamping two smaller cassettes. The total number of components, and therefore the assembly cost, is much less for a large stack with multiple cells in a cassette than for multiple stacks of single-cell cassettes having the same power capability. A single stack with more single-cell cassettes is also less reliable and manufacturable due to the large number of electrical and mechanical connections as discussed above.

Regarding mechanical robustness, the picture frames and separator plates preferably are fabricated of ferritic stainless steel which has very little strength at the elevated operating temperature of an SOFC stack. Therefore, the multiple cells are relatively independent of each other mechanically although they reside in a single cassette. In this way, stresses induced by the operating evnironment (such as thermal cycling, vibration, and the like) are absorbed independently by smaller, more robust cells.

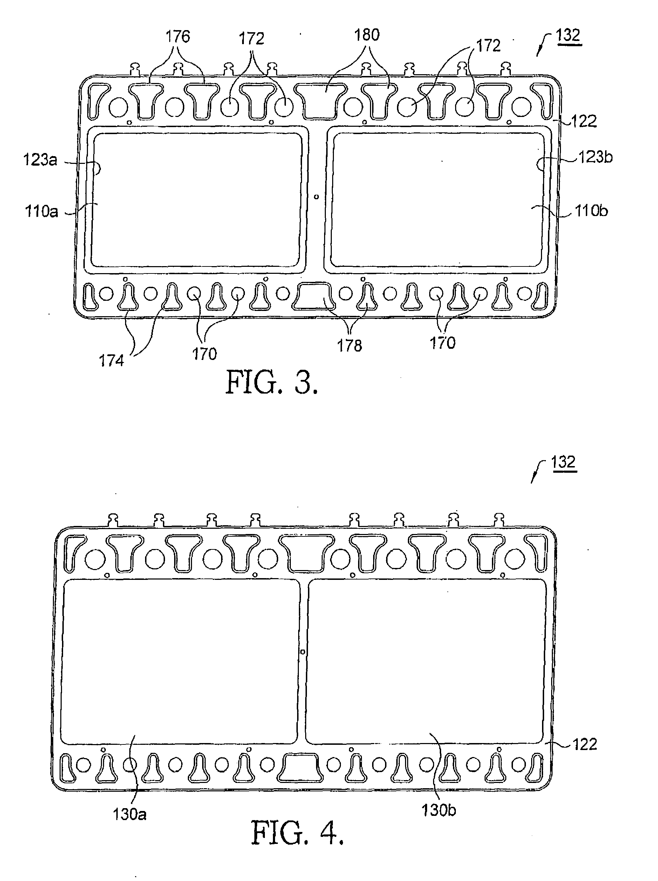

Referring to FIGS. 3 through 5, a first embodiment 132 of a fuel cell cassette having a plurality of fuel cell modules in accordance with the invention comprises a picture frame 122 having first and second windows 123a,123b for receiving first and second fuel cell modules 110a,110b, respectively. The fuel cell modules preferably are slightly larger than the windows and are surface bonded on either their cathode sides or their anode sides to the periphery of the windows in a face seal joint. As in the prior art, the picture frame 122 has a raised edge surrounding the windows to accommodate during stack assembly cathode interconnects (not shown) analogous to prior art cathode interconnect 35 shown in FIG. 2. First and second anode interconnects 130a,130b are arranged within cassette 132 in contact with first and second fuel cell modules 110a, 110b, respectively, and with separator plate 128 as in the prior art. Anode spacers (not visible) are also provided as in the prior art, configured for use in cassette 132 to provide ports 170,172 for flow of anode gas into and out of both first and second fuel cell modules 110a, 110b. Similarly, raised rims 174,176 define ports 178,180 for flow of cathode air into and out of both first and second fuel cell modules 110a, 110b. Thus first and second fuel cell modules 110a, 110b are arranged in parallel for independent electricity generation within a single picture frame 122. Of course, their individual electric contributions to a fuel cell stack are averaged by mutual connection of the first and second fuel cell elements with separator plate 128 in the shown cassette 132 and the separator plate of the next adjacent cassette in the stack.

In first embodiment 132, the fuel cell elements, having a length-to-width aspect ratio of about 3:2, are arranged with their short sides adjacent in the adjacent windows 123a,123b.

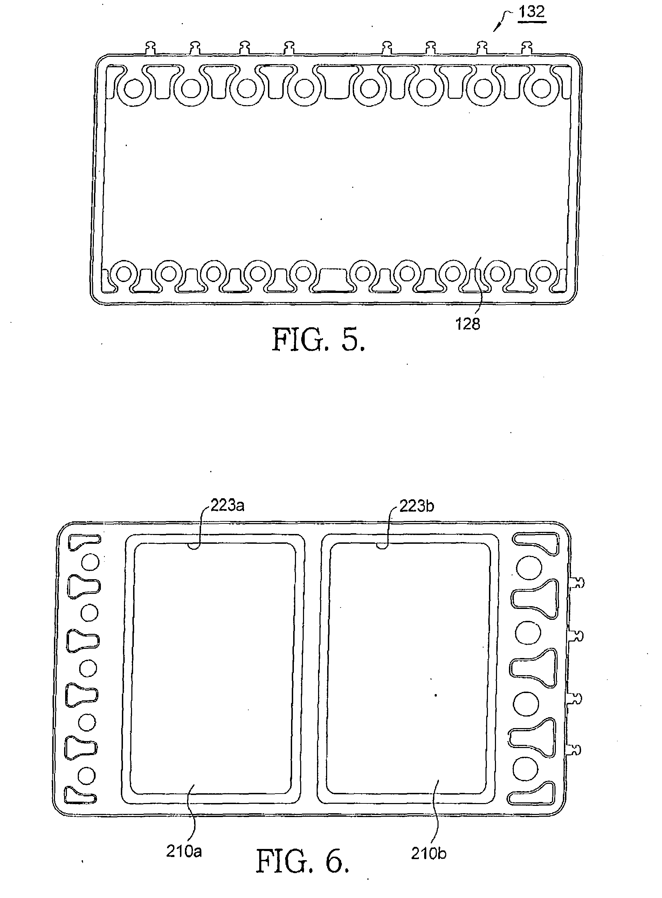

Referring now to FIG. 6, a second embodiment 232 of a fuel cell cassette in accordance with the invention includes first and second fuel cell elements 210a,210b, which may or may not be identical with first and second fuel cell elements 110a,110b, arranged in first and second windows 223a,223b, respectively, such that the first and second fuel cell elements are arranged with their long sides adjacent. Thus, the only difference between embodiments 132 and 232 is the arrangement of the windows and fuel cell elements, and thus the aspect ratio of the resulting cassettes and fuel cell stacks (not shown) formed from the cassettes.

It will be seen that a fuel cell stack formed in accordance with either first embodiment 132 or second embodiment 232 has two internal parallel electric generating stacks and thus has twice the surface area of a prior art stack having the same number of cassettes, and thus has twice the current and hence power generation capability at the same stack voltage.

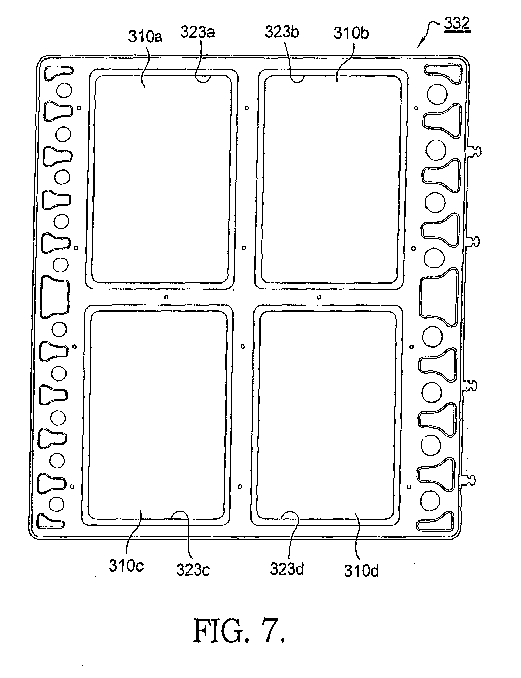

Higher pluralities of fuel cell elements in each cassette are possible within the scope of the present invention, to generate even more power at the same stack voltage. Referring to FIG. 7, a third embodiment, four-element cassette 332, has four windows 323a,323b,323c,323d and four independent fuel cell elements 310a,310b,310c,310d. The cassette has four anode interconnects (not visible), one of each being arranged adjacent each of the four fuel cell cassettes, analogous to the two interconnects 130a,130b in embodiment 132. A common separator plate (also not visible) completes the cassette 332, analogous to common separator plate 128 in embodiment 132. Thus, a fuel cell stack comprising a plurality of embodiment 332 cassettes is able to provide four times the electric power of prior art stack 26 at the same output voltage.

It is intended that the invention not be limited to the described embodiments, but will have full scope defined by the language of the following claims.

**Claims**

1. A fuel cell stage (132,332) for combining with other fuel cell stages to form a fuel cell stack, comprising:

    a) a frame (122) having a plurality of windows (123a,b, 223a,b, 323a,b,c,d); and
    b)a plurality of individual fuel cells (110a,b, 21oa,b, 310a,b,c,d),

    wherein a one of said individual fuel cells (110a,b, 21oa,b, 310a,b,c,d) is disposed in each of said windows (123a,b, 223a,b, 323a,b,c,d).

2. A fuel cell stage in accordance with Claim 1 wherein each of said individual fuel cells (110a,b, 21oa,b, 310a,b,c,d) is bonded to said frame (122).

3. A fuel cell stage in accordance with Claim 1 further comprising:

    a) an interconnect (30,35) disposed adjacent each of said individual fuel cells; and
    b) a separator (28) disposed against said interconnect and connected to said frame (122) to define a multiple-cell cassette.

4. A fuel cell stage in accordance with Claim 1 wherein each of said individual fuel cells (110a,b, 21oa,b, 310a,b,c,d) is a solid oxide fuel cell.

5. A fuel cell stage in accordance with Claim 1 wherein said plurality of fuel cells (110a,b, 21oa,b, 310a,b,c,d) are arranged in parallel electrically.

6. A fuel cell stack comprising a plurality of fuel cell stages (132,332), wherein each fuel cell stage includes
    a frame (122) having a plurality of windows (123a,b, 223a,b, 323a,b,c,d), and
    a plurality of individual fuel cells (110a,b, 21oa,b, 310a,b,c,d),
    wherein a one of said individual fuel cells is disposed in each of said windows.

7. A fuel cell stack in accordance with Claim 6 wherein each of said individual fuel cells (110a,b, 21oa,b, 310a,b,c,d) is bonded to said frame (122).

8. A fuel cell stack in accordance with Claim 6 wherein said fuel cell stages (132,332) are arranged in series electrically, and wherein said plurality of fuel cells(110a,b, 21oa,b, 310a,b,c,d) in each stage are arranged in parallel.

9. A fuel cell stack in accordance with Claim 6 wherein voltage of said stack is proportional to the number of said stages and wherein current generating capability of said stack is proportional to the total number of said individual fuel cells.

10. A fuel cell stack in accordance with Claim 6 wherein said each of said fuel cell stages further comprises
    An interconnect (30,35) disposed adjacent each of said individual fuel cells (110a,b, 21oa,b, 310a,b,c,d), and
    A separator (28) disposed against said interconnect (30,35) and connected to said frame (122) to define a multiple-cell cassette.

11. A fuel cell stack in accordance with Claim 10 wherein said stack comprises a plurality of said multiple-cell cassettes.

**Patentansprüche**

1. Brennstoffzellenabschnitt (132, 332) zum Kombinieren mit anderen Brennstoffzellenabschnitten, um einen Brennstoffzellenstapel zu bilden, der aufweist:

a) einen Rahmen (122) mit einer Vielzahl von Fenstern (123a, b, 223a, b, 323a,b,c, d); und
b) eine Vielzahl von einzelnen Brennstoffzellen (110a,b, 210a,b, 310a,b, c,d),
wobei jeweils eine der einzelnen Brennstoffzellen (110a,b, 210a,b, 310a, b,c,d) in jedem der Fenster (123a,b, 223a,b, 323a,b,c,d) angeordnet ist.

2. Brennstoffzellenabschnitt gemäß Anspruch 1, wobei jede der einzelnen Brennstoffzellen (110a,b, 210a,b, 310a,b, c,d) mit dem Rahmen (122) verbunden ist.

3. Brennstoffzellenabschnitt gemäß Anspruch 1, der weiter aufweist:

a) einen Interkonnektor (30, 35), der angrenzend an jede der einzelnen Brennstoffzellen angeordnet ist; und
b) einen Separator (28), der an den Interkonnektor angeordnet ist und mit dem Rahmen (122) verbunden ist, um eine Mehrfachzellenkassette zu definieren.

4. Brennstoffzellenabschnitt gemäß Anspruch 1, wobei jede der einzelnen Brennstoffzellen (110a,b, 210a,b, 310a,b, c,d) eine Festoxidbrennstoffzelle ist.

5. Brennstoffzellenabschnitt gemäß Anspruch 1, wobei die Vielzahl von Brennstoffzellen (110a,b, 210a,b, 310a,b,c, d) elektrisch parallel angeordnet sind.

6. Brennstoffzellenstapel, der eine Vielzahl von Brennstoffzellenabschnitten (132, 332) aufweist, wobei jeder Brennstoffzellenabschnitt umfasst
einen Rahmen (122) mit einer Vielzahl von Fenstern (123a,b, 223a,b, 323a,b,c,d), und
eine Vielzahl von einzelnen Brennstoffzellen (110a,b, 210a,b, 310a,b,c, d),
wobei jeweils eine der einzelnen Brennstoffzellen in jedem der Fenster angeordnet ist.

7. Brennstoffzellenstapel gemäß Anspruch 6, wobei jede der einzelnen Brennstoffzellen (110a,b, 210a,b, 310a,b,c,d) mit dem Rahmen (122) verbunden ist.

8. Brennstoffzellenstapel gemäß Anspruch 6, wobei die Brennstoffzellenabschnitte (132, 332) elektrisch in Serie angeordnet sind, und wobei die Vielzahl von Brennstoffzellen (110a,b, 210a,b, 310a,b,c,d) in jedem Abschnitt parallel angeordnet sind.

9. Brennstoffzellenstapel gemäß Anspruch 6, wobei eine Spannung des Stapels proportional ist zu der Anzahl von Abschnitten und wobei eine Stromerzeugungsfähigkeit des Stapels proportional ist zu der gesamten Anzahl der einzelnen Brennstoffzellen.

10. Brennstoffzellenstapel gemäß Anspruch 6, wobei jeder der Brennstoffzellenabschnitte weiter aufweist
einen Interkonnektor (30, 35), der angrenzend an jede der einzelnen Brennstoffzellen (110a,b, 210a,b, 310a,b,c,d) angeordnet ist, und
einen Separator (28), der an den Interkonnektor (30, 35) angeordnet ist und mit dem Rahmen (122) verbunden ist, um eine Mehrfachzellenkassette zu definieren.

11. Brennstoffzellenstapel gemäß Anspruch 10, wobei der Stapel eine Vielzahl der Mehrfachzellenkassetten aufweist.


**Revendications**

1. Étage de pile à combustible (132, 332) destiné à être combiné avec d'autres étages de pile à combustible pour former un empilement de piles à combustible, comprenant :

a) un cadre (122) ayant une pluralité de fenêtres (123a,b, 223a,b, 323a,b, c,d) ; et
b) une pluralité de piles à combustible individuelles (110a,b, 210a,b, 310a,b,c,d),
dans lequel une desdites piles à combustible individuelles (110a,b, 210a,b, 310a,b,c,d) est disposée dans chacune desdites fenêtres (123a,b, 223a,b, 323a,b,c,d).

**2.** Étage de pile à combustible selon la revendication 1, dans lequel chacune desdites piles à combustible individuelles (110a,b, 210a,b, 310a,b,c,d) est assemblée par collage audit cadre (122).

**3.** Étage de pile à combustible selon la revendication 1, comprenant en outre :

a) une interconnexion (30, 35) disposée adjacente à chacune desdites piles à combustible individuelles ; et
b) un séparateur (28) disposé contre ladite interconnexion et connecté audit cadre (122) pour définir une cassette à cellules multiples.

**4.** Étage de pile à combustible selon la revendication 1, dans lequel chacune desdites piles à combustible individuelles (110a,b, 210a,b, 310a,b,c,d) est une pile à combustible à oxyde solide.

**5.** Étage de pile à combustible selon la revendication 1, dans lequel ladite pluralité de piles à combustible (110a,b, 210a,b, 310a,b,c,d) sont agencées en parallèle sur le plan électrique.

**6.** Empilement de piles à combustible comprenant une pluralité d'étages de pile à combustible (132, 332), dans lequel chaque étage de pile à combustible inclut :

un cadre (122) ayant une pluralité de fenêtres (123a,b, 223a,b, 323a,b,c, d), et
une pluralité de piles à combustible individuelles (110a, b, 210a, b, 310a, b,c,d), telles qu'une desdites piles à combustible individuelles est disposée dans chacune desdites fenêtres.

**7.** Empilement de piles à combustible selon la revendication 6, dans lequel chacune desdites piles à combustible individuelles (110a, b, 210a, b, 310a, b, c, d) est assemblée par collage audit cadre (122).

**8.** Empilement de piles à combustible selon la revendication 6, dans lequel lesdits étages de pile à combustible (132, 332) sont agencés en série sur le plan électrique, et dans lequel ladite pluralité de piles à combustible (110a,b, 210a,b, 310a,b,c,d) dans chaque étage sont agencées en parallèle.

**9.** Empilement de piles à combustible selon la revendication 6, dans lequel le voltage dudit empilement est proportionnel au nombre desdits étages, et dans lequel la capacité de génération de courant dudit empilement est proportionnelle au nombre total desdites piles à combustible individuelles.

**10.** Empilement de piles à combustible selon la revendication 6, dans lequel chacun desdits étages de pile à combustible comprend encore
une interconnexion (30, 35) disposée adjacente de chacune des piles à combustible individuelles (110a, b, 210a, b, 310a, b, c, d), et
un séparateur (28) disposé adjacent à ladite interconnexion (30, 35) et connecté audit cadre (122) pour définir une cassette à cellules multiples.

**11.** Empilement de piles à combustible selon la revendication 10, dans lequel ledit empilement comprend une pluralité desdites cassettes à cellules multiples.

FIG. 1.
(PRIOR ART)

FIG. 2.
(PRIOR ART)

FIG. 3.

FIG. 4.

132

128

FIG. 5.

223a    223b

210a    FIG. 6.    210b

FIG. 7.